# EUROPÄISCHE PATENTSCHRIFT

(11) **EP 1 964 291 B1**
(45) Veröffentlichungstag und Bekanntmachung des Hinweises auf die Patenterteilung: **30.03.2011**
(21) Anmeldenummer: 06807541.5
(22) Anmeldetag: 25.10.2006
(51) Int. Cl.: H04B 10/17, H01S 3/067

(54) **REGELBARER OPTISCHER VERSTÄRKER UND VERFAHREN ZUR REGELUNG EINES OPTISCHEN VERSTÄRKERS**
REGULATABLE OPTICAL AMPLIFIER, AND METHOD FOR REGULATING AN OPTICAL AMPLIFIER
AMPLIFICATEUR OPTIQUE REGLABLE ET PROCEDE POUR LE REGLAGE D'UN AMPLIFICATEUR OPTIQUE

(30) Priorität: 15.12.2005 DE 102005060019
(43) Veröffentlichungstag der Anmeldung: 03.09.2008
(73) Patentinhaber: Nokia Siemens Networks GmbH & Co. KG, 81541 München (DE)
(72) Erfinder: ZHUBER-OKROG, Kuno, 1050 Wien (AT)
(86) Internationale Anmeldenummer: PCT/EP2006/067764
(87) Internationale Veröffentlichungsnummer: WO 2007/071477

(56) Entgegenhaltungen:
- EP-A1- 1 467 506
- EP-A1- 1 528 698
- US-B1- 6 441 950

## Beschreibung

Die Erfindung betrifft einen regelbaren optischen Verstärker nach dem Oberbegriff des Patentanspruchs 1 und ein Verfahren zur Regelung eines optischen Verstärkers nach dem Oberbegriff des Patentanspruchs 9.

In optischen Transportnetzen mit hoher Reichweite werden zur Signalverstärkung üblicherweise optische Faserverstärker verwendet, deren Verstärkungsfasern mit Ionen eines aus der Gruppe der Seltenen Erden stammenden Elementes dotiert sind. Kommerziell werden überwiegend mit Erbiumionen dotierte Faserverstärker (engl. "Erbium doped fiber amplifiers", abgekürzt EDFAs) eingesetzt. Ein solcher EDFA weist neben dem Eingang für das Datensignal eine optische Pumpquelle, z.B. eine Laserdiode, auf, deren Ausgangssignal in die mit Erbiumionen dotierte Faser eingekoppelt wird. Das in der dotierten Faser geführte optische Datensignal wird durch stimulierte Emission von Photonen verstärkt. In der Regel bestehen die EDFAs aus mehreren Verstärkerstufen. Als Verstärkerstufe wird im Folgenden jeweils der Teil eines EDFAs bezeichnet, der genau eine zusammenhängende mit Erbium dotierte Faser enthält, die zwischen passiven Komponenten angeordnet ist. Im Folgenden werden Verstärker betrachtet, die in mehrere Verstärkergruppen aufgeteilt sind, wobei eine Verstärkergruppe entweder aus einer einzelnen Verstärkerstufe oder aus mehreren Verstärkerstufen bestehen kann.

Um die Kapazität der optischen Übertragungsfasern auszuschöpfen werden die Datensignale in einzelnen Übertragungskanälen übertragen, die häufig mittels der Wellenlängenmultiplex-Technik (engl. "wavelength division multiplexing", abgekürzt WDM) zusammengefasst werden. Mittels der WDM-Technik ist heutzutage eine Übertragung von WDM-Signalen mit bis zu 80 Kanälen bei Datenraten von bis zu 40 Gbit/s möglich. Die Anzahl der Kanäle variiert je nach Auslastung und Transportaufkommen des Übertragungssystems. Werden Kanäle im Überträgungssystem zu- und abgeschaltet oder an Verzweigungspunkten ein- und ausgekoppelt, so kommt es zu sprunghaften Änderungen der Summensignalleistung im Übertragungssystem. Diese können zu Bitfehlern und auch zu Schäden an den optischen Empfängern führen, weil diese nur für einen begrenzten Eingangsleistungsbereich fehlerfrei arbeiten können.

Liegen solche sprunghafte Änderungen der Signalleistung am Eingang eines optischen Verstärkers vor, so muss die Pumpleistung des Verstärkers an diese Leistungsschwankungen des Eingangssignals schnell angepasst werden, um große Sprünge in den Leistungen der am Schaltvorgang nicht beteiligten Kanäle zu vermeiden. Die Ausgangsleistung eines optischen Verstärkers hängt von seinem Gewinn ab. Der Verstärkergewinn wird neben Materialparametern von der Pumpwellenlänge und Pumpleistung bestimmt. Des Weiteren wird der Verstärkergewinn beim Erreichen der maximal möglichen Ausgangsleistung (Sättigung) von der Eingangsleistung bestimmt. Wenn der Gewinn konstant bleibt, ändert sich die Leistung der am Schaltvorgang nicht beteiligten Kanäle nicht, da diese immer im gleichen Maße verstärkt werden. Bei der Auslegung eines optischen Faserverstärkers ist es daher stets von Bedeutung, einen'möglichst konstanten Verstärkergewinn auch bei großen Leistungssprüngen am Verstärkereingang zu erzielen. Dies wird mittels Gewinnregelungen erreicht. Bei diesen handelt es sich üblicherweise um Ausgangsleistungsregelungen in Verbindung mit einem aus dem Eingangssignal abgeleiteten verstärkten Signal als Sollwert. Aus dem Stand der Technik sind vielfach Verfahren zur Regelung des Verstärkergewinns bzw. der Verstärkerausgangsleistung bekannt. Zumeist werden Regeleinrichtungen verwendet, welche mit einer Steuerung, einer so genannten Feedforward-Steuerung, ergänzt sind. Im Regelkreis und der Feedforward-Steuerkette bildet die optische Pumpe das Stellglied und die Pumpleistung entspricht demnach der Stellgröße.

In den Gesamtanordnungen optischer Verstärker sind Signalverzögerungen unvermeidbar. Bei der Signalverstärkung kommt es insbesondere in EDFAs allein durch die Laufzeit in der optischen Faser zu Verzögerungen des optischen Signals. Diese betragen annähernd 0,3 bis 0,6 µs. Des Weiteren entstehen auch durch den physikalischen Vorgang der Verstärkung Verzögerungen. Bei Verwendung einer Pumpquelle von 980 nm werden die Elektronen des Dotier-Elements Erbium beim Pumpvorgang zunächst auf ein erstes höheres atomares Energieniveau angehoben, von dem aus sie erst in einem nicht-strahlenden Übergang in ein metastabiles Zwischenniveau relaxieren, bevor sie unter Aussendung von Photonen in das atomare Grundniveau zurückfallen. Neben diesen Verzögerungen des optischen Signals, treten auch Verzögerungen des elektrischen Signals innerhalb der Regeleinrichtung bedingt durch deren einzelne Bauglieder auf. Dazu gehören zum Beispiel Verzögerungen bei der Erfassung und opto-elektrischen Wandlung der Eingangs- und Ausgangssignale, Verzögerungen bei den Aktuatoren der Pumpeinrichtung und bei der Signalprozessierung, welche analog oder digital erfolgen kann. All diese Faktoren beeinflussen das Regelverhalten negativ, d.h. die dynamischen Eigenschaften der Regeleinrichtung führen nicht zu einer optimalen Systemantwort. So kommt es während der Einschwingzeit der Regeleinrichtung zu unerwünschten Transienten im Verstärkergewinn, die sich in Form von Über- oder Unterschwingern in der Ausgangsleistung des Verstärkers und in unerwünschten Gewinnänderungen äußern.

Werden mehrere einstufige Verstärker zur Erzielung höherer Reichweiten hintereinander geschaltet, so entsteht eine Verstärkerkaskade. In diesem Fall können sich Über- und Unterschwinger in der Ausgangsleistung des Verstärkers aufaddieren. Kleine Abweichungen im Gewinn einzelner Verstärker führen zu großen Abweichungen im Gewinn am Ausgang der Verstärkerkaskade. Zusätzlich erschweren die oben genannten optischen und elektrischen Signalverzögerungen die exakte Regelung des Verstärkergewinns am Ausgang der Verstärkerkaskade. Beträchtliche Verzögerungen des optischen Signals in einer Größenordnung von 100 µs treten bedingt durch die Signallaufzeit ein, wenn zwischen einzelnen Verstärkerstufen dispersionskompensierende Fasern (engl. "dispersion compensating fibers", abgekürzt DCFs) geschaltet werden.

Aus einer älteren deutschen Patentanmeldung mit der Anmeldungsnummer 10 2004 052 883.7 ist eine Lösung zur Kompensation von Gewinnschwankungen eines mehrstufigen optischen Verstärkers bekannt. Bei einem Leistungssprung der Eingangsleistung wird die Pumpleistung der ersten Verstärkerstufe angepasst, die an einer nachfolgenden zweiten Verstärkerstufe zu erwartende Änderung der Eingangsleistung ermittelt und in Abhängigkeit davon eine neue Pumpleistung für die zweite Pumpeinrichtung berechnet. Dabei wird die neue Pumpleistung zu Beginn einer vorgegebenen Vorhaltzeit vor dem Eintreffen des Leistungssprungs am Eingang der zweiten Verstärkerstufe eingestellt. Ein Nachteil dieser Lösung ist, dass die Wirkung der Regelung verfrüht einsetzt und dass die dadurch entstandenen zwar sehr kleinen Gewinnabweichungen sich in einer Verstärkerkaskade unvorteilhaft auswirken. Außerdem ist die Vorhaltzeit abhängig vom Verhältnis der optischen Leistungen am Eingang und am Ausgang der Verstärkerstufen und von der Reglereinstellung. Das Regelverhalten ist unter diesen Voraussetzungen schwer optimierbar.

Weiterhin ist in der europäischen Patentschrift EP-A-1467506 Folgendes beschrieben: Ein regelbarer optischer Verstärker weist zwei in Serie geschaltete Verstärkergruppen auf, wobei jede Verstärkergruppe jeweils eine Pumpeinrichtung und eine Regeleinrichtung aufweist, die miteinander verbunden sind und wobei die Regeleinrichtung die Pumpleistung derartig regelt, dass bei veränderter Eingangsleistung der Verstärkergewinn konstant gehalten wird und bei der der ersten Verstärkergruppe eine Leistungsmonitoreinrichtung vorgeschaltet ist, die die Änderung in der Eingangsleistung erfasst und dabei der elektrische Ausgang der Leistungsmonitoreinrichtung mit den Regeleinrichtungen verbunden ist, derart dass zwischen erster und zweiter Regeleinrichtungen eine Steuerkette mit einem Verzögerungsglied eingefügt ist.

Es ist die Aufgabe der vorliegenden Erfindung, einen mehrere Verstärkerstufen oder -gruppen aufweisenden optischen Verstärker mit möglichst optimalem Regelverhalten bereitzustellen, so dass Leistungstransienten im Ausgangssignal des optischen Verstärkers insbesondere nach einer sprunghaften Änderung der Eingangsleistung möglichst reduziert werden. Ferner ist ein entsprechendes Verfahren zur Regelung eines optischen Verstärkers anzugeben.

Diese Aufgabe wird anordnungsgemäß durch die Merkmale des Patentanspruchs 1 und in verfahrenstechnischer Hinsicht durch die Merkmale des Patentanspruchs 9 gelöst. Weitere Ausgestaltungen der Erfindung sind Gegenstand von Unteransprüchen.

Ein wesentlicher Gedanke der Erfindung besteht darin, die Feedforward-Steuerung eines optischen Verstärkers, der mindestens zwei in Reihe geschaltete Verstärkergruppen aufweist, durch Einfügen einer zusätzlichen Steuerkette zwischen den Regeleinrichtungen der einzelnen Verstärkergruppen zu verbessern. Es wird der Fehler ausgeglichen, der durch die inhärenten Verzögerungen in der Regeleinrichtung der ersten Verstär-kergruppe entsteht. Die erfindungsgemäße Steuerkette empfängt das gleiche Eingangssignal wie die Regeleinrichtung der ersten Verstärkergruppe. Sie weist eine Serienschaltung auf, die bevorzugt ein Hochpassfilter, eine Verzögerungs- und Signalformungseinheit und eine Feedforward-Einheit enthält. Das Hochpassfilter besitzt eine Grenzfrequenz, die annähernd der Grenzfrequenz der ersten Verstärkergruppe entspricht. In der Verzögerungs- und Signalformungseinheit wird ein Steuersignal gebildet, das den zeitlichen Fehler des Stellsignals der ersten Gruppe nachbildet. In der Verzögerungs- und Signalformungseinheit wird das Steuersignal mit einer zeitlich verzögerten Kopie des Signals zeitlich überlagert, wobei die Verzögerungsdauer der der Regelung der ersten Verstärkergruppe entspricht. Anschließend wird in der Feedforward-Einheit ein Korrektursignal für das Stellsignal der zweiten Regeleinrichtung in der passenden Amplitude generiert. Auf diese Weise wird die Dynamik des Steuerungs- und Regelungsprozesses optimiert. Es wird vorteilhaft eine optimale Einstellung der Pumpleistung für die zweite Verstärkergruppe erreicht, was dazu führt, dass Transienten am Ausgang des optischen Verstärkers verhindert werden. Unter optimaler Einstellung der Pumpleistung ist hier gemeint, dass die sprunghafte Änderung der Leistung des optischen Signals und das entsprechend angepasste Pumpleistungssignal zum gleichen Zeitpunkt an der Stelle des Verstärkers ankommen, an der das Pumpsignal in die Übertragungsfaser eingekoppelt wird. Durch die erfindungsgemäße Steuerkette ist die Dynamik der Gesamtheit der Regeleinrichtungen auf diesen Zeitpunkt abgestimmt.

Weitere Vorteile der Erfindung sind in den Unteransprüchen angegeben.

Die Erfindung wird nun anhand der Figuren näher erläutert:

### Es zeigen

- Fig. 1: ein Blockschaltbild einer Verstärkergruppe mit angeschlossener Regeleinrichtung,
- Fig. 2: ein Blockschaltbild eines regelbaren optischen Ver- stärkers mit zwei Verstärkergruppen und der erfin- dungsgemäßen Steuerkette,
- Fig. 3: eine Gegenüberstellung der Zeitverläufe der am Steuerungs- und Regelungsprozess beteiligten opti- schen und elektrischen Signale.

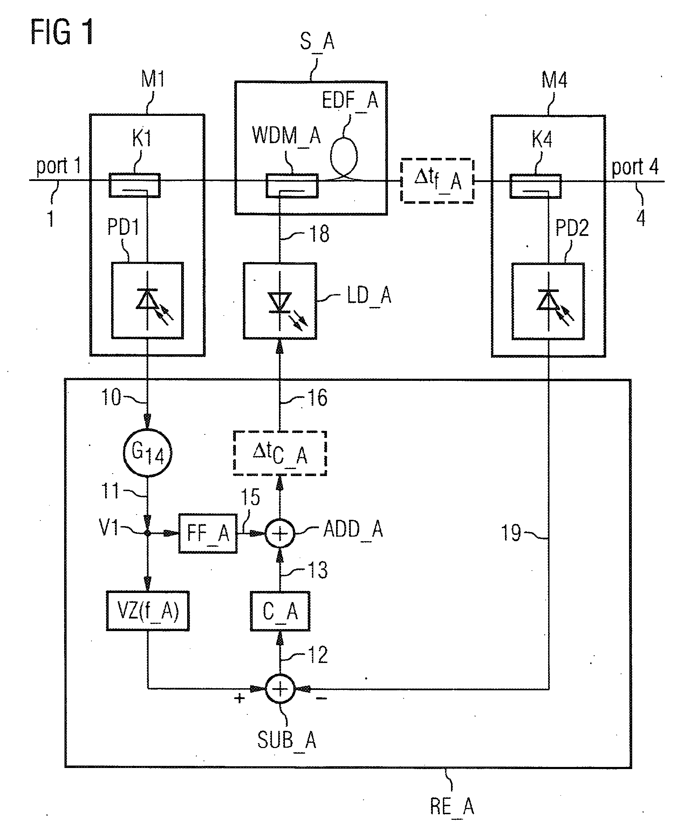

Anhand von Fig. 1 wird zunächst die Regeleinrichtung einer einzelnen EDFA-Stufe näher erläutert. In Fig. 1 ist ein entsprechendes Blockschaltbild angegeben. Vom Eingang port 1 aus wird einer Verstärkerstufe S_A ein optisches WDM-Signal 1 zugeführt, das vorzugsweise einen Wellenlängenbereich um 1550 nm aufweist. Die Verstärkerstufe S_A umfasst eine mit Erbium-Ionen dotierte Verstärkungsfaser EDF_A und einen wellenlängenselektiven Koppler WDM_A, über den der Verstärkungsfaser EDF_A ein Pumpsignal 15 einer Pumpquelle LD_A zugeführt wird. Bei der Pumpquelle kann es sich beispielsweise um eine Laserdiode der Emmissionswellenlänge von 980 nm oder 1480 nm handeln. An den Eingang der Verstärkerstufe S_A (port1) ist eine Leistungsmonitoreinrichtung M1 für das Eingangssignal angeschlossen, die beispielsweise aus einem Koppler, K1 mit nachgeschalteter Monitorphotodiode PD1 besteht. Der am elektrischen Ausgang der Leistungsmonitoreinrichtung M1 abgegebene Photostrom wird als elektrisches Eingangssignal 10 der Regeleinrichtung RE_A zugeführt. Vor dem Ausgang port 4 der Gesamtanordnung ist eine weitere Leistungsmonitoreinrichtung M4 für das Ausgangssignal 4 angeordnet. Letztere besteht ebenfalls aus einem Koppler K4 mit angeschlossener Photodiode PD4. Die Leistungsmonitoreinrichtung M4 dient der Erfassung der Regelgröße (=Ausgangsleistung). Der von der Monitoreinrichtung M4 gelieferte Photostrom entspricht demnach dem Istwert der Regelgröße. Der Sollwert der Regelgröße wird mit Hilfe der Leistungsmonitoreinrichtung M1 erzeugt. Das elektrische Eingangssignal wird zunächst einer Skaliereinheit G₁₄ zugeführt. Dabei kann es sich beispielsweise um einen elektrischen Verstärker handeln. Die Skaliereinheit G₁₄ hat die Funktion, den Gewinn der EDFA-Stufe nachzubilden. Der Gewinn ist dabei vorgegeben. Am Ausgang der Skaliereinheit G₁₄ liegt somit ein Signal mit einer Sollausgangsleistung 11 vor, auf die geregelt werden soll. Diese Sollausgangsleistung 11 dient einerseits als Sollwert der Regelgröße, andererseits als Referenzsignal für die Feedforward-Steuereinheit FF_A. Das Signal 11 wird daher einer Verzweigungsstelle V1 zugeführt, die einerseits mit der Feedforward-Steuereinheit FF_A, andererseits mit einer ersten Mischstelle SUB_A verbunden ist. Die erste Mischstelle SUB_A weist einen Eingang für den Sollwert der Ausgangsleistung 11 und einen Eingang für den Istwert der Ausgangsleistung 19 auf. Damit die beiden Werte zeitgleich an der Mischstelle anliegen ist im Pfad des Sollwert-Signals ein Verzögerungsglied VZ(f_A) eingefügt. In dem Verzögerungsglied VZ(f_A) wird das Sollwert-Signal um die Zeitspanne Δt_{f_A} verzögert. Diese Zeitspanne entspricht der Verzögerung, die das optische WDM-Signal beim Durchlaufen der EDFA-Stufe mit den zugehörigen Zuleitungsfasern erfährt. Diese Verzögerung ist im Signalweg des optischen Signals als Block mit der Bezeichnung Δt_{f_A} mit einer gestrichelten Linie gekennzeichnet.

An der ersten Mischstelle SUB_A wird der Soll- und Istwert der Ausgangsleistung miteinander verglichen und das Differenzsignal 12, auch als Regelabweichung 12 bezeichnet, wird der Regel- oder Korrektureinheit C_A zugeführt. Diese berechnet in Abhängigkeit von der Regelabweichung 12 einen positiven oder negativen Korrekturwert 13 für die Stellgröße. Die Stellgröße oder das Stellsignal der Regeleinheit ist der Pumpstrom 16, der annähernd linear mit der Ausgangsleistung der Pumpquelle 18 verknüpft ist. Um den Regelprozess zu beschleunigen und um nach einer Änderung in der Eingangsleistung genauer den gewünschten Gewinnwert halten zu können, wird die Regelung um die Feedforward-Steuerung ergänzt. In der Feedforward-Steuereinheit FF_A wird aufbauend auf einem vorgegebenen Modell die Pumpleistung für die Pumpquelle berechnet, die schätzungsweise zur Aufrechterhaltung eines konstanten Gewinns notwendig ist. Der von der Regeleinheit C_A berechnete Korrekturwert 13 wird daher an einer weiteren Mischstelle ADD_A modifiziert, indem der von der Feedforward-Steuereinheit FF_A vorgegebene Schätzwert 15 dem Signal 13 aufaddiert wird. Dieser aus der Feedforward-Steuereung und der Regelschleife resultierende Wert 16 für die Stellgröße wird nun der Pumpquelle LD_A zugeführt. Um die Verzögerungen, die bei der Signalprozessierung auftreten, kenntlich zu machen, wurde an dieser Stelle ein Block mit der Bezeichnung Δt_{c_A} mit einer gestrichelten Linie eingefügt. Im Folgenden ist stets zu beachten, dass es sich bei den Blöcken mit gestrichelter Linie nicht um Bauglieder der Regelungseinrichtung oder um sonstige Funktionsblöcke handelt, sondern dass die Blöcke mit gestrichelter Linie nur das Zeitverhalten des jeweils betrachteten Signals hervorheben sollen. Aufgrund der Kennzeichnung der Signalverzögerungen durch das Kästchen Δt_{c_A} wird deutlich, dass das Pumpsignal 18 den EDFA stets verzögert erreichen wird. Außerdem soll mit dem Kästchen Δt_{c_A} neben den Signalverzögerungen in der elektronischen Regelvorrichtung auch die sich gleichartig auswirkende Verzögerung im optischen Weg und im bereits beschriebenen physikalischen Pumpvorgang zusammenfassend verdeutlicht werden.

Die durch die Regelungseinrichtung und Verstärkergruppe bedingte Verzögerung Δt_{c_A} kann in einem mehrstufigen Verstärker kompensiert werden, indem die Laufzeit des optischen Signals bei der Ausbreitung in einer zwischen zwei Stufen angeordneten dispersionskompensierenden Faser DCF genutzt wird. Diese Signallaufzeitverzögerungen können bis zu 100 µs betragen und können bei der Signalprozessierung der elektrischen Signale in der Regeleinrichtung genutzt werden.

Unter dieser Voraussetzung wird der Steuerungs- und Regelungsprozess optimiert, indem die Laufzeit der elektrischen Signale innerhalb der Regelstrecke (oder hier innerhalb der Regeleinrichtungen) optimal an die Laufzeit des optischen Signals in der Übertragungsstrecke angepasst wird. Zur Verbesserung des dynamischen Verhaltens innerhalb der Regeleinrichtungen wird eine Signal-Analyse durchgeführt. Da es sich bei einem EDFA um ein nichtlineares System handelt, werden nur kleine Signalstörungen an einem festgelegten Arbeitspunkt betrachtet, d.h. für einen festen Gewinnwert respektive eine vorgegebene Eingangs- und Ausgangsleistung. In diesem Fall kann das System linearisiert werden und die lineare Systemtheorie ist anwendbar. In diesem Fall der Kleinsignal-Analyse werden im Folgenden daher nur kleine Änderungen der Eingangsleistung angenommen. Diese werden beispielsweise durch Modulation eines elektrischen Signals einer bestimmten Frequenz auf das optische WDM_Signal erreicht. Das derart aufgeprägte elektrische Eingangssignal kann aus einer Sinus-Funktion oder aus mehreren solchen periodischen Funktionen unterschiedlicher Frequenz zusammengesetzt sein. Auf diese Weise kann eine Stufenfunktion erzeugt werden, wie sie optisch beim Zu- oder Abschalten von Kanälen vorliegen würde. Die Antwort eines Regelblocks auf das Eingangssignal (wie hier die Stufenfunktion) ist geeignet, das Zeitverhalten des Regelblocks ebenso wie die des ganzen regelkreises vollständig zu beschreiben, soweit lineares Verhalten gewährleistet ist. Die Zeitfunktion, die den zeitlichen Verlauf des Signals am Ausgang eines Regelblocks als Antwort auf eine sprunghafte Änderung des Eingangssignals beschreibt, wird Sprungantwort oder Übergangsfunktion genannt. Im Frequenzbereich ergibt sich die Fouriertransformierte des zeitlichen Signalverlaufs am Ausgang des Systems aus dem Produkt der Fouriertransformierten des zeitlichen Signalverlaufs am Eingang des Systems und einer Übertragungsfunktion des Systems. Wird die Frequenz des elektrischen Eingangssignals oder bei mehreren Frequenzen das Spektrum des Eingangssignals am Eingang des Spektrums verändert, so kann durch Aufnahme des elektrischen Spektrums am Ausgang des EDFAs oder der Regeleinrichtung das Zeitverhalten der Regelstrecke überprüft werden. Unter Verwendung eines Vektornetzwerkanalysators können Rückschlüsse auf Betrag und Phase des Eingangssignals getroffen werden.

Wird mittels der Kleinsignalanalyse die Übertragungsfunktion eines EDFAs bestimmt, so ergibt sich, dass die Übertragungsfunktion für ein Eingangssignal, das in einem EDFA in Sättigung verstärkt wird, einen Hochpass darstellt. Die Grenzfrequenz des Hochpasses ist proportional zur Ausgangsleistung des EDFAs. Ist innerhalb einer Verstärkergruppe, die beispielsweise aus mehreren EDFA-Stufen besteht, eine variabler Abschwächer eingefügt (engl. "variable optical attenuator", abgekürzt VOA) so wird die Grenzfrequenz mit dem Abschwächungsfaktor vergrößert. Dies bedeutet, dass mittels eines Hochpasses die Wirkung einer Verstärkergruppe auf ein sprunghaftes Eingangssignal nachgebildet werden kann. Genauer ausgedrückt bildet das Hochpassfilter die Systemantwort des Pumppfades der ersten Verstärkergruppe nach, die durch die Umrechnung vom optischen Pfad auf den Pumppfad der zweiten Verstärkergruppe modifiziert wurde. Diese Systemantwort ist dem Frequenzgang des optischen Pfads ähnlich. Werden weiterhin die Verzögerungen, die sowohl im optischen Pfad, als auch in den Regeleinrichtungen auftreten, ausbalanciert, so kann eine ideale Sprungfunktion am Ausgang des optischen Verstärkers erreicht werden. Erfindungsgemäß wird dazu zwischen den Regeleinrichtungen einer ersten Verstärkergrupppe und einer zweiten Verstärkergruppe eine zusätzliche Steuerkette eingefügt, die bevorzugt aus einem Hochpassfilter, einer Verzögerungs- und Signalformungseinheit und einer Skaliereinheit für das Steuersignal besteht. Einzelheiten sind dem folgenden Ausführungsbeispiel zu entnehmen. Bereits ohne das Hochpassfilter wird durch die Einführung der Steuerkette bereits eine Verbesserung des dynamischen Verhaltens erreicht, obwohl mit einem genau dimensionierten Hochpassfilter eine viel genauere Einhaltung von konstantem Gewinn erzielt wird.

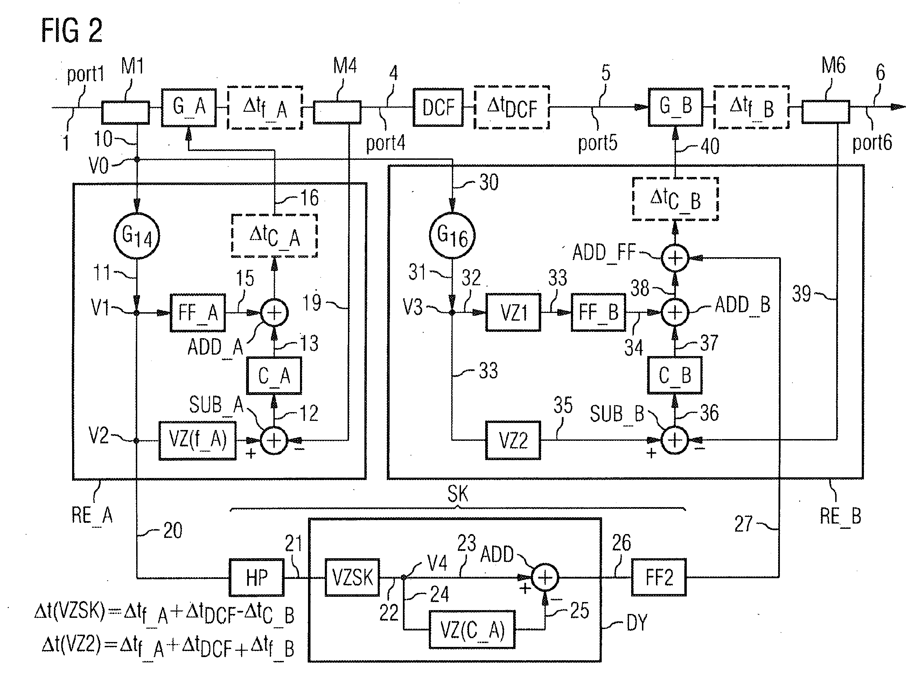

In Fig. 2 ist ein Blockschaltbild eines optischen Verstärkers dargestellt, der in diesem Ausführungsbeispiel aus zwei Verstärkergruppen G_A und G_B besteht. Der obere Pfad enthält die optischen Komponenten und entspricht dem optischen Pfad des optischen WDM-Signals. Die angeschlossenen Regeleinrichtungen enthalten die elektronischen Funktionseinheiten und Pfade. Sie können entweder analog oder digital, beispielsweise mittels einer digitalen Prozessoreinheiet (engl. "digital processor unit", abgekürzt DSP) realisiert werden. Die Verstärkergruppen in diesem Ausführungsbeispiel können aus einer oder mehreren Verstärkerstufen nach Fig. 1 aufgebaut sein. Ferner können sie mehr als eine Pumplaserdiode als Pumpeinrichtung enthalten oder auch nur eine Laserdiode, die mehrere Verstärkerstufen pumpt. Der Funktionsblock G_A oder G_B soll hier neben einer Anzahl von mit Erbium dotierten Fasern sämtliche passiven optischen Komponenten, wie Koppler, Isolatoren, VOAs und eine beliebig nach dem Stand der Technik ausgelegte Pumpeinrichtung enthalten. Dem Eingang port 1 der in Fig. 2 gezeigten Verstärkeranordnung ist eine Leistungsmonitoreinrichtung M1 (ebenfalls nach Fig. 1) nachgeschaltet, über deren optischen Ausgang das WDM-Signal 1 der Verstärkergruppe G_A und über deren elektrischen Ausgang das opto-elektrisch gewandelte Eingangssignal 10 einer ersten Regeleinrichtung RE_A zugeführt wird. Hinter der Verstärkergruppe G_A ist eine weitere Monitoreinrichtung M4 zur Erfassung der Ausgangsleistung angeordnet. Das elektrische Ausgangssignal vom M4 entspricht dem Ist-Wert der Regelgröße und wird der Regeleinrichtung RE_A zugeführt. Die Regeleinrichtung RE_A ist analog zu der in Fig. 1 beschriebenen Regelvorrichtung aufgebaut und liefert als Stellsignal einen Pumpstrom 14 für die innerhalb der Verstärkergruppe G_A enthaltenen Pumpeinrichtung. Zur Kennzeichnung von Verzögerungen des optischen Signals, die sich durch Faserzuleitungen innerhalb der Verstärkergruppe A ergeben, ist das gestrichelte Kästchen Δt_{f_A} eingezeichnet. Zur Kennzeichnung der inhärenten Verzögerungen des elektrischen Signals innerhalb der Regelvorrichtung RE_A und der Verzögerungen im Zusammenhang mit dem Pumpvorgang des Verstärkers G_A ist das gestrichelte Kästchen Δt_{c_A} angegeben. Die Zeitspanne Δt_{c_A} wird auch als Reaktionszeit der Regelung RE_A bezeichnet.

An die ausgangsseitige Monitoreinrichtung M4 der ersten Verstärkergruppe G_A kann sich beispielsweise eine dispersionskompensierende Faser DCF anschließen, die eine Verzögerung des optischen Signals von ΔT_{DCF} bewirkt. Die zweite Verstärkergruppe G_B weist in diesem Ausführungsbeispiel nur eine ausgangsseitige Leistungsmonitoreinrichtung M6 auf. Auch diese Verstärkergruppe kann je nach Bedarf mehrere Erbium-Fasern mit einer oder mehreren zugehörigen Pumpeinrichtungen enthalten. Die Verzögerungen des optischen Signals bedingt durch die Erbium dotierte Faser und die Faserzuleitungen sind hier durch das gestrichelte Kästchen Δt_{f_B} angegeben. Die Pumpleistung für die Verstärkergruppe G_B wird mittels der Regeleinrichtung RE_B angepasst. Diese ist prinzipiell wie die Regeleinrichtung RE_A der ersten Gruppe ausgelegt. Das Eingangssignal erhält die Regeleinrichtung RE_B von der ersten Monitoreinrichtung M1 vor der ersten Verstärkergruppe G_A. Da das optische Signal im oberen Pfad von port 1 bis port 5 die Verzögerungen Δt_{f_A}+Δt_{DCF} erfährt, müssen auch die elektrischen Signale in der Regeleinrichtung RE_B zeitlich angepasst werden, um zeitgleich mit dem optischen Signal zu wirken.

Das am Verzweigungspunkt V0 hinter der Monitoreinrichtung M1 abgezweigte opto-elektrisch gewandelte Eingangssignal 30, wird zunächst der Skaliereinheit G₁₆ der Regeleinrichtung RE_B zugeführt, wo es mit einem Gewinnfaktor, der dem gesamten optischen Pfad von port 1 bis port 6 einschließlich der Verstärkergruppe G_B entspricht, multipliziert wird. Das derart skalierte Signal 31 wird anschließend der Verzweigungsstelle V3 zugeführt. Ein erster Ausgang dieser Verzweigungsstelle führt das Signal 32 über ein erstes Verzögerungselement VZ1 zu der Feedforward-Steuereinheit FF_B. In diesem Verzögerungselement VZ1 wird das Signal um die Zeitspanne Δt_{f_A}+Δt_{DCF}-Δt_{c_B} verzögert. Wenn beispielsweise weitere Elemente diesem Pfad hinzugefügt werden, dann ist die Verzögerungszeit in VZ1 um die Verzögerung dieser Elemente entsprechend zu verringern. Auf diese Weise wird erreicht, dass das Steuersignal der Feedforward-Steuereinheit FF_B bereits vor der Reaktionszeit der zweiten Regelung Δt_{c_B} generiert wird. Ein zweiter Ausgang der Verzweigungsstelle V3 führt über ein zweites Verzögerungselement VZ2 zu der Mischstelle SUB_B der Regeleinrichtung RE_B, wo der Sollwert 35 mit dem Istwert 39 verglichen wird und die Regelabweichung 36 an die Regeleinheit C_B abgegeben wird. Dabei wurde das Verzögerungselement VZ2 derart eingestellt, dass das Signal des Sollwertes 33 um eine Zeitspanne Δt_{f_A}+Δt_{DCF}+Δt_{f_B} verzögert wird, weil auch das Signal des Ist-Wertes 39 genau diese Verzögerungen durchlaufen hat und so eine zeitgleiche Subtraktion erfolgt. An die Regeleinheit C_B schließt sich ein Addierer ADD_B an, in dem das Steuersignal 34 der Feedforward-Steuereinheit FF_B und das in der Regeleinheit erzeugte Korrektursignal 37 zusammenaddiert werden.

Um die Reaktionszeit der ersten Regeleinrichtung zu kompensieren, wird das Stellsignal 38, das am Ausgang des Addierers ADD_B anliegt durch ein weiteres Korrektursignal 27 sowohl zeitlich, als auch der Amplitude nach angepasst. Dazu wird eine weitere Steuerkette SK verwendet, die als Eingangssignal das von der Skaliereinheit G₁₄ abgegebene Sollwert-Signal 11 verwendet. Dazu ist innerhalb der Regeleinrichtung RE_A im Unterschied zu Fig. 1 hinter dem ersten Verzweigungspunkt V1 ein zweiter Verzweigungspunkt V2 vorgesehen, von dem aus das zuvor in G₁₄ skalierte Eingangssignal 11 der erfindungsgemäßen Steuerkette SK zugeführt wird.

Das elektrische Signal 20 wird zunächst einem Hochpassfilter HP zugeführt. Durch die Filterung des Eingangssignals mit einem Hochpass, der die gleiche Grenzfrequenz wie die Verstärkergruppe G_A aufweist, wird das Feedforward-Signal derart geformt, sodass das optische Ausgangssignal von Gruppe G_B dieselbe Form aufweist, wie wenn das Eingangssignal von Gruppe A am Eingang von Gruppe G_B anliegen würde. Dann kann innerhalb von Gruppe G_B ein Feedforward-Steuersignal verwendet werden, das im Ausgangssignal keine Überschwinger generiert. An den Hochpassfilter HP schließt sich in diesem Ausführungsbeispiel eine Verzögerungs- und Signalformungseinheit DY an. Diese kann auch vor dem Hochpassfilter HP angeordnet sein. Innerhalb dieser Verzögerungs- und Signalformungseinheit erfährt das Signal zunächst in eine Verzögerung, die der Zeitspanne Δt_{f_A}+Δt_{DCF}-Δt_{c_B} entspricht, d.h. das elektrische Signal wird um die Zeit, die das optische Signal zum Durchlaufen der Verstärkergruppe G_A und der DCF benötigt, verzögert. Von dieser Verzögerung wird die Reaktionszeit oder inhärente Verzögerungszeit der Verstärkergruppe G_B subtrahiert, damit das Feedforward-Signal rechtzeitig generiert werden kann. Zur Einstellung der Verzögerung Δt_{f_A}+Δt_{DCF}-Δt_{c_B} ist das Verzögerungselement VZSK vorgesehen. An das Verzögerungselement VZSK schließt sich ein Verzweigungspunkt V4 an, dessen erster Ausgang direkt mit einem Addierer ADD verbunden ist, während der zweite Ausgang über ein zwischengeschaltetes Verzögerungselement VZ(C_A) mit dem Addierer verbunden ist. Auf diese Weise wird eine Kopie 24 des elektrischen Signals 23 erzeugt, die in VZ(C_A) um die Reaktionszeit oder die inhärente Verzögerungszeit Δt_{c_A} der Regeleinrichtung RE_A der ersten Verstärkergruppe V_A verzögert wird. Im Addierer ADD wird das unverzögerte Signal 23 und das verzögerte Signal 25 zusammenaddiert, sodass am Ausgang der Verzögerungs- und Signalformungseinheit DY ein Signalimpuls der Zeitspanne Δt_{c_A} vorliegt. Werden die Übertragungsfunktionen am Ausgang der Blöcke HP und DY betrachtet, so stellt die Übertragungsfunktion am Ausgang des Hochpassfilters eine Nachbildung der Verstärkergruppe G_A dar, während die Übertragungsfunktion am Ausgang der Verzögerungs- und Signalformungseinheit DY den durch die inhärente Verzögerung der Verstärkergruppe G_A erzeugten Fehler darstellt. In der an DY angeschlossenen Feedforward-Steuereinheit FF2 wird nun ein Korrektursignal 27 erzeugt, das den Fehler von Gruppe G_A kompensiert. Das Korrektursignal 27 stellt somit ein zusätzliches Feedforward-Steuersignal dar und wird in einer Mischstelle ADD_FF dem Stellsignal 38 der herkömmlichen Regeleinrichtung von Gruppe G_B aufaddiert. Das resultierende Stellsignal 40, das zur Einstellung der Pumpleistung in Verstärkergruppe V_B vorgesehen ist, ist zeitlich so eingestellt, dass die inhärente Verzögerung der Regeleinrichtung von Verstärkergruppe V_B, welche in der Zeichnung durch das gestrichelte Kästchen Δt_{c_B} angedeutet ist, keine Rolle mehr spielt und ausgeglichen ist. Das gestrichelte Kästchen Δt_{c_B} ist an dieser Stelle nur eingefügt, um summarisch auf die in RE_B und der Pumpeinrichtung von G_B auftretenden Verzögerungen aufmerksam zu machen, hat aber an dieser Stelle auf das Signal 40 keine Wirkung.

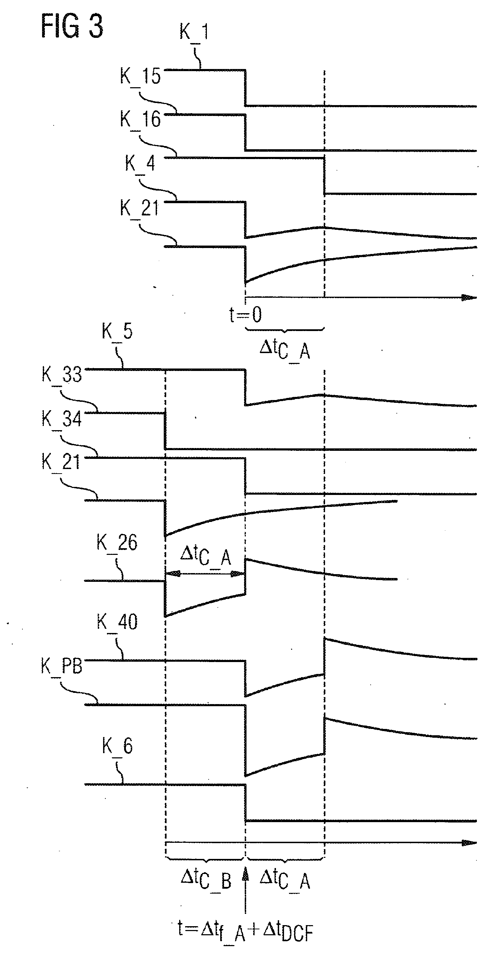

Zur Verdeutlichung der Wirkungsweise der einzelnen Funktionsblöcke der erfindungsgemäßen Steuerkette SK sind in Fig. 3 einige Zeitverläufe des elektrischen Signals und des optischen Signals an verschiedenen Stellen innerhalb der Regeleinrichtung und innerhalb des optischen Pfades der Verstärkeranordnung angegeben. Kurve K_1 stellt die Leistung des optischen WDM-Signals 1 am Eingang (port 1) von Verstärkergruppe V_A dar. Es handelt sich um eine Stufenfunktion, den den Wegfall von Kanälen darstellen soll. Der Leistungssprung findet zum Zeitpunkt t = 0 statt. Kurve K_15 stellt das Ausgangssignal 15 der Feedforward-Steuereinheit FF_A dar. Auch das Stellsignal am Ausgang des Addierers ADD_A würde wie K_15 aussehen. Kurve K_16 stellt das effektive Stellsignal oder mit anderen Worten die Wirkung des Pumpsignals dar. Anhand von Kurve K_16 wird deutlich, dass das Pumpsignal um die Zeitspanne Δt_{c_A} zu spät wirkt. Aufgrund dieser Reaktionszeit Δt_{c_A} der Verstärkergruppe G_A treten bei der optischen Ausgangsleistung Über- oder Unterschwinger auf. In Kurve K_4 ist ein solcher Überschwinger in der optischen Leistung am Ausgang von Gruppe A (port 4) dargestellt. Kurve K_21 zeigt das elektrische Signal 21 am Ausgang des Hochpassfilters. Es handelt sich hierbei um die Sprungantwort des Regelblocks HP.

Die folgenden Kurvenscharen zeigen die Signalverläufe zu einem im Vergleich zu t = 0 verspäteten Zeitpunkt t = Δt_{f_A}+Δt_{DCF}. So zeigt die Kurve K_5 den Verlauf des optischen Signals 5 am Eingang von Verstärkergruppe G_B. Der Leistungssprung in der optischen Signalleistung kommt um die Laufzeit Δt_{f_A}+Δt_{DCF} (=Laufzeit durch Verstärkergruppe G_A + Laufzeit durch DCF) verzögert an der Verstärkergruppe G_B an. Die Kurve K_33 zeigt das elektrische Signal 33 am Ausgang des Verzögerungselementes VZ1 innerhalb der Regeleinrichtung RE_B der zweiten Verstärkergruppe G_B. Die Wirkung der Feedforward-Steuereinheit FF_B ist in Kurvenverlauf K_34 angedeutet. Das Signal 34 würde um die Reaktionszeit Δt_{c_B} verspätet wirken; wenn nicht die erfindungsgemäße Steuerkette SK eingefügt wäre.

Innerhalb der Steuerkette SK durchläuft das elektrische Signal diese Reaktionszeit Δt_{c_B} nicht. Die Signallaufzeit des elektrischen Signals wird nur an die des optischen Signals zu Beginn der Verstärkergruppe G_B angepasst. Dazu muss es das Verzögerungselement VZSK durchlaufen. Das elektrische Signal 21 am Ausgang von VZSK ist im Kurvenverlauf K_21 dargestellt. Weiterhin ist in Kurvenverlauf K_26 das elektrische Signal 26 am Ausgang der Verzögerungs- und Signalformungseinheit DY angegeben. Durch die Überlagerung des Signals 23 mit einer um die Reaktionszeit Δt_{c_A} von RE_A zeitverzögerten Kopie 25 ist ein Signalimpuls der Länge Δt_{c_A} entstanden. Das Signal 26 wird der Feedforward-Steuereinheit FF2 zugeführt, wo die Amplitude angepasst wird, und anschließend wird das Steuersignal 27 im Addierer ADD_FF mit dem Regelsignal 38 addiert. Das Ausgangssignal 40 der Regeleinrichtung RE_B ist im Kurvenverlauf K_40 illustriert. K_40 zeigt die effektive Wirkung der erfindungsgemäßen Steuerkette SK. Das zugehörige Pumpsignal, das in der Verstärkergruppe G_B wirksam wird, ist Gegenstand von Kurvenverlauf K_PB. Kurvenverlauf K_PB kommt durch Addition von K_40 mit K_34 zustande. Es ist anzumerken, dass in diesem Ausführungsbeispiel die Zeitspannen Δt_{c_A} und Δt_{c_B} gleich sind. Die Wirkung des Pumpsignals wird anhand von Kurvenverlauf K_6 deutlich. Hierbei handelt es sich um die Ausgangsleistung des optischen Signals 6 am Ausgang port 6 der Verstärkergruppe G_B. Es wird deutlich, dass während des Reaktionszeitintervalls Δt_{c_A} die Pumpleistung erst sprunghaft erniedrigt werden muss, um den Verstärkergewinn zu verringern und dem Überschwinger entgegenzuwirken und anschließend die Pumpleistung wieder erhöht werden muss, um den Verstärkergewinn wieder anzuheben. Anhand der Kurvenverläufe K_5, K PB und K_6 wird deutlich, dass das Zeitverhalten der einzelnen Regelblöcke der Regeleinrichtung RE_B optimal ausgelegt ist. Es wurde eine optimale Feedforward-Steuerung für die gesamte Verstärkeranordnung erreicht.

Ein weiterer Vorteil der erfindungsgemäßen Auslegung der Feedforward-Steuerung ist, dass der Betrag des von der Feedforwardsteuereinheit FF2 abgegebenen Korrektursignals unabhängig vom Arbeitspunkt der Regeleinrichtungen RE_A oder RE_B ist. Der Betrag des Korrektursignals hängt im Wesentlichen von der im Bauteil G14 erfolgten Skalierung des von der Monitoreinrichtung M1 abgezweigten Eingangssignals ab. Damit ist das in FF2 generierte Korrektursignal unabhängig von Ausgangsleistung der einzelnen Verstärkergruppen G_A und G_B.

Weitere Realisierungsmöglichkeiten können gebildet werden, wenn die Feedforward-Steuerung der Verstärkergruppe G_A schwächer oder stärker eingestellt wird oder gänzlich ausgeschaltet wird. Um den entsprechenden Faktor müsste das Signal 25 durch das VZ(C_A) geschwächt werden, bzw. könnte dieses Verzögerungsglied bei nicht vorhandenem FF_A entfallen.

## Patentansprüche

1. Regelbarer optischer Verstärker,
der mindestens zwei in Serie geschaltete Verstärkergruppen (G_A, G_B) aufweist,
bei dem jede Verstärkergruppe (G_A, G_B) jeweils eine Pumpeinrichtung und eine mit dieser Pumpeinrichtung verbundene Regeleinrichtung (RE_A, RE_B) aufweist, die bei einer Änderung in der Eingangsleistung die Pumpleistung zur Aufrechterhaltung eines konstanten Verstärkergewinns anpasst, und bei dem der ersten Verstärkergruppe (G_A) eine Leistungsmonitoreinrichtung (M1) zur Erfassung von Änderungen in der Eingangsleistung vorgeschaltet ist, deren elektrischer Ausgang sowohl mit der ersten Regeleinrichtung (RE_A) als auch mit der zweiten Regeleinrichtung (RE_B) verbunden ist,
**dadurch gekennzeichnet,**
**dass** zwischen der ersten und der zweiten Regeleinrichtung (RE_A und RE_B) eine Steuerkette (SK) eingefügt ist, die eine Serienschaltung aufweist, umfassend
- ein Hochpassfilter (HP) mit einer Grenzfrequenz, die annähernd der Grenzfrequenz der ersten Verstärkergruppe (G_A) entspricht,
- eine Verzögerungs- und Signalformungseinheit (DY) und
- eine Feedforward-Steuereinheit (FF2) zur Generierung eines Korrektursignals (27) für die zweite Regeleinrichtung (RE_B).

2. Regelbarer optischer Verstärker nach Anspruch 1,
**dadurch gekennzeichnet,**
**dass** die Verzögerungs- und Signalformungseinheit (DY) eine Serienschaltung aus einem Verzögerungselement (VZSK) und einem Differenzglied umfasst, wobei das Differenzglied aus einem eingangsseitigen Verzweigungselement (V4) zur Aufteilung des Eingangssignals (22) in zwei gleiche Teilsignale (23, 24) besteht, aus einem weiteren Verzögerungselement (VZ(C_A)), das in einem der Teilpfade angeordnet ist, und aus einem ausgangsseitigen Addierer (ADD)
zur Zusammenfassung des verzögerten (25) und des unverzögerten (23) Teilsignals.

3. Regelbarer optischer Verstärker nach Anspruch 1,
**dadurch gekennzeichnet,**
**dass** jede der Regeleinrichtungen (R_A, R_B) der Verstärkergruppen (G_A, G_B) eingangsseitig eine Skaliereinheit (G₁₄, G₁₆) aufweist, an die sich eine erste Verzweigungsstelle (V1, V3) anschließt, dass deren erster Ausgang mit einer Steuereinheit (FF_A, FF_B) verbunden ist und deren zweiter Ausgang zu einem ersten Eingang einer ersten Mischstelle (SUB_A, SUB_B) führt,
**dass** ein zweiter Eingang der ersten Mischstelle (SUB_A, SUB_B) mit einer ausgangsseitigen Leistungsmonitoreinrichtung (M4, M6) der jeweiligen Verstärkergruppe (G_A, G_B) verbunden ist,
**dass** ein Ausgang der ersten Mischstelle (SUB_A, SUB_B) mit einer Regeleinheit (C_A, C_B) verbunden ist, deren Ausgang zu einem ersten Eingang einer zweiten Mischstelle (ADD_A, ADD_B) führt,
**dass** ein zweiter Eingang der zweiten Mischstelle (ADD_A, ADD_B) mit der Steuereinheit (FF_A, FF_B) verbunden ist und der Ausgang der zweiten Mischstelle (ADD_A, ADD_B) an die Pumpeinrichtung der jeweiligen Verstärkergruppe (G_A, G_B) angeschlossen ist.

4. Regelbarer optischer Verstärker nach Anspruch 3,
**dadurch gekennzeichnet,**
**dass** die Regeleinrichtung (RE_A) der ersten Verstärkergruppe (G_A) derart ausgestaltet ist, dass hinter der ersten Verzweigungsstelle (V1) eine zweite Verzweigungsstelle (V2) angeordnet ist, deren erster Ausgang mit der ersten Mischstelle (SUB_A) und deren zweiter Ausgang mit der Steuerkette (SK) verbunden ist.

5. Regelbarer optischer Verstärker nach Anspruch 3,
**dadurch gekennzeichnet,**
**dass** die Regeleinrichtung (RE_B) der zweiten Verstärkergruppe (G_B) derart ausgestaltet ist, dass der Steuereinheit (FF_B) ein erstes Verzögerungselement (VZ1) und der ersten Mischstelle (SUB_B) ein zweites Verzögerungselement (VZ2) vorgeschaltet ist, wobei die in den Verzögerungselementen (VZ1 und VZ2) erzielten Verzögerungen unterschiedlich sind.

6. Regelbarer optischer Verstärker nach einem der vorherigen Ansprüche,
**dadurch gekennzeichnet,**
**dass** jede Verstärkergruppe (G_A, G_B) mindestens eine Verstärkerstufe umfasst.

7. Regelbarer optischer Verstärker nach einem der vorherigen Ansprüche,
**dadurch gekennzeichnet,**
**dass** zwischen den Verstärkergruppen (G_A, G_B) mindestens eine dispersionskompensierende Faser (DCF) angeordnet ist.

8. Verfahren zur Regelung eines optischen Verstärkers,
der mindestens zwei in Serie geschaltete Verstärkergruppen (G_A, G_B) aufweist, wobei der Gewinn des optischen Verstärkers mittels Regeleinrichtungen (RE_A, RE_B) geregelt wird, indem eine Änderung in der Eingangsleistung (1) der ersten Verstärkergruppe (G_A) ermittelt wird und bei einer Änderung in der Eingangsleistung (1) eine jeder Verstärkergruppe (G_A, G_B) zugeführte Pumpleistung zur Aufrechterhaltung eines konstanten Verstärkergewinns angepasst wird,
**dadurch gekennzeichnet,**
**dass** ein Teil dieser Eingangsleistung (1) abgezweigt und den Regeleinrichtungen (RE_A, RE_B) der Verstärkergruppen (G_A, G_B) zugeführt wird, und nach einer Skalierung zur Feedforward-Steuerung und zur Einstellung eines Sollwerts der Ausgangsleistung der jeweiligen Verstärkergruppe (G_A, G_B) verwendet wird,
**dass** das skalierte Steuersignal (11) für die erste Regeleinrichtung (R_A) einem Hochpassfilter (HP) zugeführt wird, dessen Übertragungsfunktion der der ersten Verstärkergruppe (G_A) ohne Berücksichtigung von Verzögerungen entspricht, dass aus dem mittels des Hochpassfilters (HP) geformten Steuersignal mittels einer Verzögerungs- und Signalformungseinheit (DY) ein Signalimpuls (26) generiert wird,
**dass** dieser Signalimpuls (26) in der Amplitude an die für die zweite Verstärkergruppe (G_B) benötigte Pumpleistung angepasst wird und anschließend als Korrektursignal (27) für die Regeleinrichtung (RE_B) der zweiten Verstärkergruppe (G_B) verwendet wird.

9. Verfahren nach Anspruch 8,
**dadurch gekennzeichnet,**
**dass** die Zeitdauer des Signalimpulses (26) einer Reaktionszeit (Δt_{C_A}) der ersten Regeleinrichtung (R_A) entspricht.

10. Verfahren nach Anspruch 9,
**dadurch gekennzeichnet,**
**dass** das skalierte Steuersignal (31) für die zweite Regeleinrichtung (RE_B) aufgeteilt und beide Teilsignale (32, 33) zeitlich verzögert werden, wobei die Verzögerungszeit für das Steuersignal (32) aus der Summe aus der Verzögerungszeit des optischen Signals innerhalb der ersten Verstärkergruppe (Δt_{f_A}) plus der Verzögerungszeit des optischen Signals innerhalb einer zwischen der ersten und zweiten Verstärkergruppe angeordneten dispersionskompensierenden Faser (Δt_{DCF}) minus der Reaktionszeit (Δt_{c_B}) der zweiten Regeleinrichtung (R_B) besteht und die Verzögerungszeit für den Sollwert (33) aus der Summe aus den Verzögerungszeiten des optischen Signals innerhalb der ersten und zweiten Verstärkergruppe (Δt_{f_A}+Δt_{f_B}) plus der Verzögerungszeit des optischen Signals innerhalb einer zwischen der ersten und
zweiten Verstärkergruppe angeordneten dispersionskompensierenden Faser (Δt_{DCF}) besteht.

## Claims

1. Regulatable optical amplifier
which has at least two series-connected amplifier groups (G_A, G_B),
in which each amplifier group (G_A, G_B) respectively has a pump device and a regulating device (RE_A, RE_B) connected to said pump device, said regulating device, in the event of a change in the input power, adapting the pump power in order to maintain a constant amplifier gain,
and in which a power monitor device (M1) for detecting changes in the input power is connected upstream of the first amplifier group (G_A), the electrical output of said power monitor device being connected both to the first regulating device (RE_A) and to the second regulating device (RE_B),
**characterized**
**in that** there is inserted between the first and the second regulating device (RE_A and RE_B) a control chain (SK) having a series circuit comprising
- a high-pass filter (HP) having a cut-off frequency which corresponds approximately to the cut-off frequency of the first amplifier group (G_A),
- a delay and signal-shaping unit (DY), and
- a feedforward control unit (FF2) for generating a correction signal (27) for the second regulating device (RE_B).

2. Regulatable optical amplifier according to Claim 1,
**characterized**
**in that** the delay and signal-shaping unit (DY) comprises a series circuit composed of a delay element (VZSK) and a differential element, the differential element comprising an input-side branching element (V4) for splitting the input signal (22) into two identical partial signals (23, 24), a further delay element (VZ(C_A)), which is arranged on one of the partial paths, and an output-side adder (ADD) for combining the delayed (25) and the undelayed (23) partial signal.

3. Regulatable optical amplifier according to Claim 1,
**characterized**
**in that** each of the regulating devices (R_A, R_B) of the amplifier groups (G_A, G_B) has on the input side a scaling unit (G₁₄, G₁₆) followed by a first branching location (V1, V3), in that the first output thereof is connected to a control unit (FF_A, FF_B) and the second output thereof leads to a first input of a first mixing location (SUB_A, SUB_B),
**in that** a second input of the first mixing location (SUB_A, SUB_B) is connected to an output-side power monitor device (M4, M6) of the respective amplifier group (G_A, G_B),
**in that** an output of the first mixing location (SUB_A, SUB_B) is connected to a regulating unit (C_A, C_B), the output of which leads to a first input of a second mixing location (ADD_A, ADD_B),
**in that** a second input of the second mixing location (ADD_A, ADD_B) is connected to the control unit (FF_A, FF_B) and the output of the second mixing location (ADD_A, ADD_B) is connected to the pump device of the respective amplifier group (G_A, G_B).

4. Regulatable optical amplifier according to Claim 3,
**characterized**
**in that** the regulating device (RE_A) of the first amplifier group (G_A) is configured in such a way that there is arranged downstream of the first branching location (V1) a second branching location (V2), the first output of which is connected to the first mixing location (SUB_A) and the second output of which is connected to the control chain (SK).

5. Regulatable optical amplifier according to Claim 3,
**characterized**
**in that** the regulating device (RE_B) of the second amplifier group (G_B) is configured in such a way that a first delay element (VZ1) is connected upstream of the control unit (FF_B)
and a second delay element (VZ2) is connected upstream of the first mixing location (SUB_B), the delays obtained in the delay elements (VZ1 and VZ2) being different.

6. Regulatable optical amplifier according to any of the preceding claims,
**characterized**
**in that** each amplifier group (G_A, G_B) comprises at least one amplifier stage.

7. Regulatable optical amplifier according to any of the preceding claims,
**characterized**
**in that** at least one dispersion compensating fiber (DCF) is arranged between the amplifier groups (G_A, G_B).

8. Method for regulating an optical amplifier which has at least two series-connected amplifier groups (G_A, G_B), the gain of the optical amplifier being regulated by means of regulating devices (RE_A, RE_B),
by determining a change in the input power (1) of the first amplifier group (G_A) and, in the event of a change in the input power (1), adapting a pump power fed to each amplifier group (G_A, G_B) in order to maintain a constant amplifier gain,
**characterized**
**in that** part of said input power (1) is tapped off and fed to the regulating devices (RE_A, RE_B) of the amplifier groups (G_A, G_B), and is used after scaling for feedforward control and for setting a desired value of the output power of the respective amplifier group (G_A, G_B),
**in that** the scaled control signal (11) for the first regulating device (R_A) is fed to a high-pass filter (HP), the transfer function of which corresponds to that of the first amplifier group (G_A) without taking account of delays,
**in that** a signal pulse (26) is generated from the control signal shaped by means of the high-pass filter (HP), by means of a delay and signal-shaping unit (DY),
**in that** said signal pulse (26) is adapted in terms of amplitude to the pump power required for the second amplifier group (G_B) and is subsequently used as a correction signal (27) for the regulating device (RE_B) of the second amplifier group (G_B).

9. Method according to Claim 8,
**characterized**
**in that** the time duration of the signal pulse (26) corresponds to a reaction time (Δt_{c_A}) of the first regulating device (R_A).

10. Method according to Claim 9,
**characterized**
**in that** the scaled control signal (31) for the second regulating device (RE_B) is split and both partial signals (32, 33) are temporally delayed, the delay time for the control signal (32) comprising the sum of the delay time of the optical signal within the first amplifier group (Δt_{f_A}) plus the delay time of the optical signal within a dispersion compensating fiber (ΔT_{DCF}) arranged between the first and second amplifier groups minus the reaction time (Δt_{c_B}) of the second regulating device (R_B), and the delay time for the desired value (33) comprising the sum of the delay times of the optical signal within the first and second amplifier groups (Δt_{f_A}+Δt_{f_B}) plus the delay time of the optical signal within a dispersion compensating fiber (Δt_{DCF}) arranged between the first and second amplifier groups.

## Revendications

1. Amplificateur optique réglable qui comporte au moins deux groupes amplificateurs (G_A, G_B) montés en série, dans lequel chaque groupe amplificateur (G_A, G_B) comporte respectivement un dispositif de pompage et un dispositif de réglage (RE_A, RE_B) relié à ce dispositif de pompage et qui, en cas de modification de la puissance d'entrée, adapte la puissance de pompage pour maintenir un gain d'amplificateur constant, et dans lequel est monté, en amont du premier groupe amplificateur (G_A), pour détecter des modifications au niveau de la puissance d'entrée, un dispositif de surveillance de la puissance (M1) dont la sortie électrique est reliée non seulement au premier dispositif de réglage (RE_A), mais aussi au deuxième dispositif de réglage (RE_B), **caractérisé en ce qu'**est insérée, entre les premier et deuxième dispositifs de réglage (RE_A et RE_B), une chaîne de commande (SK) qui comporte un montage en série, comprenant :
- un filtre passe-haut (HP) avec une fréquence limite qui correspond approximativement à la fréquence limite du premier groupe amplificateur (G_A) ;
- une unité de retard et de mise en forme de signaux (DY) ; et
- une unité de commande feed forward (FF2) pour générer un signal de correction (27) pour le deuxième dispositif de réglage (RE_B).

2. Amplificateur optique réglable selon la revendication 1, **caractérisé en ce que** l'unité de retard et de mise en forme de signaux (DY) comprend un montage en série formé d'un élément de retard (VZSK) et d'un élément différentiel, l'élément différentiel étant composé d'un élément de bifurcation (V4) côté entrée pour répartir le signal d'entrée (22) en deux signaux partiels identiques (23, 24), d'un autre élément de retard (VZ(C_A)) qui est situé dans l'un des chemins partiels et d'un additionneur (ADD) côté sortie pour regrouper le signal partiel retardé (25) et le signal partiel non retardé (23).

3. Amplificateur optique réglable selon la revendication 1,
**caractérisé en ce que** chacun des dispositifs de réglage (R_A, R_B) des groupes amplificateurs (G_A, G_B) présente, côté entrée, une unité de mise à l'échelle (G₁₄, G₁₆) à laquelle se connecte un premier point de bifurcation (V1, V3), **en ce que** la première sortie de celui-ci est reliée à une unité de commande (FF_A, FF_B) et la deuxième sortie de celui-ci mène à une première entrée d'un premier point de mélange (SUB_A, SUB_B),
**en ce qu'**une deuxième entrée du premier point de mélange (SUB_A, SUB_B) est reliée à un dispositif de surveillance de la puissance côté sortie (M4, M6) du groupe amplificateur respectif (G_A, G_B),
**en ce qu'**une sortie du premier point de mélange (SUB_A, SUB_B) est reliée à une unité de réglage (C_A, C_B) dont la sortie mène à une première entrée d'un deuxième point de mélange (ADD_A, ADD_B),
**en ce qu'**une deuxième entrée du deuxième point de mélange (ADD_A, ADD_B) est reliée à l'unité de commande (FF_A, FF_B) et la sortie du deuxième point de mélange (ADD_A, ADD_B) est connectée au dispositif de pompage du groupe amplificateur respectif (G_A, G_B).

4. Amplificateur optique réglable selon la revendication 3, **caractérisé en ce que** le dispositif de réglage (RE_A) du premier groupe amplificateur (G_A) est réalisé de manière telle qu'est situé, derrière le premier point de bifurcation (V1), un deuxième point de bifurcation (V2) dont la première sortie est reliée au premier point de mélange (SUB_A) et dont la deuxième sortie est reliée à la chaîne de commande (SK).

5. Amplificateur optique réglable selon la revendication 3, **caractérisé en ce que** le dispositif de réglage (RE_B) du deuxième groupe amplificateur (G_B) est réalisé de manière telle qu'un premier élément de retard (VZ1) est monté en amont de l'unité de commande (FF_B) et qu'un deuxième élément de retard (VZ2) est monté en amont du premier point de mélange (SUB_B), les retards obtenus dans les éléments de retard (VZ1 et VZ2) étant différents.

6. Amplificateur optique réglable selon l'une des revendications précédentes, **caractérisé en ce que** chaque groupe amplificateur (G_A, G_B) comprend au moins un étage amplificateur.

7. Amplificateur optique réglable selon l'une des revendications précédentes, **caractérisé en ce qu'**au moins une fibre à compensation de dispersion (DCF) est située entre les groupes amplificateurs (G_A, G_B).

8. Procédé de réglage d'un amplificateur optique qui comporte au moins deux groupes amplificateurs (G_A, G_B) montés en série, le gain de l'amplificateur optique étant réglé au moyen de dispositifs de réglage (RE_A, RE_B) par détermination d'une modification au niveau de la puissance d'entrée (1) du premier groupe amplificateur (G_A) et par adaptation, en cas de modification au niveau de la puissance d'entrée (1) et pour maintenir un gain d'amplificateur constant, d'une puissance de pompage amenée à chaque groupe amplificateur (G_A, G_B), **caractérisé en ce qu'**une partie de cette puissance d'entrée (1) est dérivée et amenée aux dispositifs de réglage (RE_A, RE_B) des groupes amplificateurs (G_A, G_B) et est utilisée après une mise à l'échelle pour la commande feed forward et pour l'ajustement d'une valeur de consigne de la puissance de sortie du groupe amplificateur respectif (G_A, G_B),
**en ce que** le signal de commande mis à l'échelle (11) pour le premier dispositif de réglage (R_A) est envoyé sur un filtre passe-haut (HP) dont la fonction de transmission correspond à celle du premier groupe amplificateur (G_A) compte non tenu de retards,
**en ce que**, au moyen d'une unité de retard et de mise en forme de signaux (DY), une impulsion de signal (26) est générée à partir du signal de commande mis en forme au moyen du filtre passe-haut (HP),
**en ce que** cette impulsion de signal (26) est adaptée en amplitude à la puissance de pompage requise pour le deuxième groupe amplificateur (G_B) et est ensuite utilisée en tant que signal de correction (27) pour le dispositif de réglage (RE_B) du deuxième groupe amplificateur (G_B).

9. Procédé selon la revendication 8, **caractérisé en ce que** la durée temporelle de l'impulsion de signal (26) correspond à un temps de réaction (At_{c_A}) du premier dispositif de réglage (R_A).

10. Procédé selon la revendication 9, **caractérisé en ce que** le signal de commande mis à l'échelle (31) pour le deuxième dispositif de réglage (RE_B) est partagé et les deux signaux partiels (32, 33) sont retardés dans le temps, le temps de retard pour le signal de commande (32) se composant de la somme du temps de retard du signal optique dans le premier groupe amplificateur (Δt_{f_A}) plus le temps de retard du signal optique dans une fibre à compensation de dispersion (ΔT_{DCF}) située entre les premier et deuxième groupes amplificateurs moins le temps de réaction (Δt_{c_B}) du deuxième dispositif de réglage (R_B), et le temps de réaction pour la valeur de consigne (33) se composant de la somme des temps de retard du signal optique dans les premier et deuxième groupes amplificateurs (Δt_{f_A} + Δt_{f_B}) plus le temps de retard du signal optique dans une fibre à compensation de dispersion (ΔT_{DCF}) située entre les premier et deuxième groupes amplificateurs.
